# EUROPEAN PATENT SPECIFICATION

(11) **EP 4 562 291 B1**
(45) Date of publication and mention of the grant of the patent: **29.04.2026**
(21) Application number: 23735412.1
(22) Date of filing: 08.06.2023
(51) Int. Cl.: F02D 41/40, F02D 41/30, F02M 61/08, F02D 13/02, F02B 17/00, F01L 13/00, F02D 41/00, F02M 61/18, F02D 19/08, F02B 31/00, F02B 31/08, F01L 9/14, F02B 23/10

(54) **STRATIFIED-CHARGE, SPARK-IGNITION INTERNAL COMBUSTION ENGINE, WITH OUTWARDLY OPENING INJECTORS, AND ENGINE CONTROL METHOD**
BRENNKRAFTMASCHINE MIT GESCHICHTETER LADUNG, FUNKENZÜNDUNG MIT NACH AUSSEN ÖFFNENDEN INJEKTOREN UND MOTORSTEUERUNGSVERFAHREN
MOTEUR À COMBUSTION INTERNE À ÉTINCELLE, À CHARGE STRATIFIÉE, AYANT DES INJECTEURS À OUVERTURE VERS L'EXTÉRIEUR, ET PROCÉDÉ DE COMMANDE DE MOTEUR

(30) Priority: 29.07.2022 IT 202200016140
(43) Date of publication of application: 04.06.2025
(73) Proprietor: C.R.F. Società Consortile per Azioni, 10043 Orbassano (Torino) (IT)
(72) Inventor: RICCO, Raffaele, 10043 Orbassano (Torino) (IT); GARGANO, Marcello, 10043 Orbassano (Torino) (IT); STUCCHI, Sergio, 10043 Orbassano (Torino) (IT); MAZZARELLA, Carlo, 10043 Orbassano (Torino) (IT); DE MICHELE, Onofrio, 10043 Orbassano (Torino) (IT)
(74) Representative: Buzzi, Notaro & Antonielli d'Oulx S.p.A.
(86) International application number: PCT/IB2023/055909
(87) International publication number: WO 2024/023599

(56) References cited:
- DE-A1- 102019 113 738
- US-A1- 2004 250 780
- US-A1- 2008 290 194
- US-A1- 2016 131 058
- US-A1- 2019 093 571
- US-B1- 6 530 361
- US-B2- 6 705 261

## Description

### Field of the invention

This invention relates to spark-ignition internal combustion engines, of the type comprising one or more cylinders and respective pistons sliding within the cylinders between a Top Dead Center (TDC) and a Bottom Dead Center (BDC) and operatively connected to a crankshaft, said engine being configured to perform successive intake, compression, expansion and exhaust stages during each operating cycle in each cylinder, wherein the engine includes the features of the preamble of claim 1.

### Prior art

One of the most effective technologies for increasing the efficiency of internal combustion engines is to carry out a stratified combustion, making sure that the portion of the combustion chamber closest to the spark plug is characterized by an air/fuel ratio equal to or almost equal to the stoichiometric value, while the outermost portion of the combustion chamber, near the cylinder walls, is occupied by an extremely lean mixture.

A solution of this type is described and illustrated, for example, in document US 10,711,708 B2. The main drawback of the above known solution is that it is impossible to obtain the desired result under all operating conditions of the engine. Specifically, in the event that the engine has to operate in stoichiometric conditions, for example at high loads, and not with stratified combustion, the losses due to the cooling resulting from the contact of the air/fuel mixture with the cylinder walls become considerable.

An engine according to the preamble of claim 1 is known from US 2019/093571 A1. Further solutions are known from US 2004/250780 A1, US 6 530 361 B1, US 6 705 261 B2 and US 2016/131058 A1.

### Object of the invention

The main object of this invention is to provide a spark-ignition internal combustion engine which is characterized by high combustion efficiency and reduced harmful exhaust emissions in all operating conditions of the engine.

Another object of this invention consists in giving the combustion engine the possibility of optimizing its operation within a large area of its operating plan.

Specifically, the invention has the aim of realizing a different distribution of the equivalence ratio (ratio between the effective air/fuel dosing and the stoichiometric dosing) inside the combustion chamber, being able to increase the fraction of the fuel in proximity of the cylinder axis, without giving rise to effects of "wall impingement" on the piston or on the cylinder walls.

A further object of the invention is to achieve the aforementioned objectives with relatively simple and low-cost means.

### Summary of the invention

In view of achieving the aforementioned objects, the invention relates to an internal combustion engine according to claim 1 and a control method according to claim 10.

Thanks to the aforementioned features, the following effects are achieved:
- in said first opening period of the two intake valves, the two air flows introduced into the cylinder via the two intake ducts give rise to a flow field mainly characterized by tumble motions, therefore with maximum filling of the cylinder and minimum dissipation of the flow getting in turbulence,
- in said second opening period, the flow introduced into the cylinder via a single intake duct gives rise to a swirl motion.

The injector needle can be electromagnetically actuated, or it can be of the type forming the subject of the Italian patent applications IT 10 2022 0000 13627 and IT 10 2022 0000 13636, both filed on 06.28.2022, in which the injector comprises an electromagnetically activated hydraulic servo-valve, for activating the outwardly opening movement of the injector needle.

In the invention, said fuel supply system is configured to perform at least one fuel injection, via said injector, in each operating cycle of each cylinder, after said second opening period, when the piston of the respective cylinder is ascending from the BDC to TDC, such that said fuel injection creates a portion of fuel-air mixture in the cylinder located inside the swirl flow created in said second opening period, and kept separate by said swirl flow with respect to the charge introduced in the first opening period, which charge is more adjacent to the cylinder walls.

The use of a central injector with an injector needle having an outwardly opening movement, with a cone-shaped head which produces a radial jet substantially according to several radial directions almost perpendicular to the cylinder axis, allows to reduce the penetration of the spray (for liquid fuels) or jet (in case of gaseous fuels): a reduced penetration allows to avoid, particularly in the case where the injection event occurs when the piston is in proximity of the TDC, the contact of the spray droplets on the piston head, which would have the effect of preventing its evaporation with the consequent formation of particulate matter and HC.

In one example, the fuel supply system is configured to perform a further fuel injection between the first opening period and the second opening period. This further fuel injection is performed in such a way as to give rise to a mixture with an air/fuel ratio equal to at least 1.5 times the stoichiometric ratio, while the fuel injection after the second opening period is performed in such a way whereby the portion of mixture in proximity of the cylinder axis and the spark plug has an air/fuel ratio substantially equal to the stoichiometric value.

In a preferred embodiment, the actuation device for actuating the intake valves is an electronically controlled hydraulic actuation device (for example the device developed by the Applicant and marketed under the trademark "Multi-Air") or a device with electromagnetic or electropneumatic actuators. In each case, the actuation device for actuating the intake valves is configured to change the crank angle at which each intake valve is opened and/or the crank angle at which each intake valve is closed and/or the lift at which each intake valve is opened, depending on engine load and engine speed.

In this way, it is in particular possible to regulate, depending on engine load and engine speed, the stage and the lift of said first intake valve during said second opening period, which allows to change the intensity of the swirl motion imparted to the charge of air introduced into the cylinder in the second opening period, again depending on engine load and engine speed.

As indicated, the injector device is arranged in the center of the combustion chamber and the spark plug is preferably arranged adjacent thereto. Thanks to the swirl motion of the charge of air introduced in the second opening period, introducing a predefined fuel mass during the fuel injection after the second opening period, the mixture is substantially a stoichiometric mixture in the central zone in proximity of the injector and to the spark plug, while it is an ultra-lean mixture in the outermost zones of the combustion chamber, which drastically reduces losses due to the transfer of heat by the burnt gases due to contact with the cylinder walls.

The invention also relates to the engine control method described above.

### Detailed description of the invention

Further features and advantages of the invention will become apparent from the following description with reference to the attached drawings, provided purely by way of non-limiting example, in which:
- figure 1 is a schematic perspective view of the combustion chamber of a cylinder of the internal combustion engine according to the invention,
- figure 2 is a schematic sectional view of the combustion chamber of the cylinder of the engine according to the invention,
- figure 3 shows a diagram of a variable actuation system of the intake valves of the known type developed by the Applicant and marketed under the trademark "Multi-Air", which can be used in the engine according to the invention,
- figure 4 shows the diagrams of the lift of the two intake valves associated with each cylinder of the engine according to the invention,
- figure 5 is a diagram showing the change of the mass of air introduced into the cylinder as a function of the crank angle, in comparison with a conventional solution,
- figure 6 is another diagram showing the change of the airflow rate (expressed in Kg/s) as a function of the crank angle, in comparison with a conventional solution,
- figures 7, 8, 9 are diagrams showing the change of the tumble index, swirl index and cross-tumble index as a function of the crank angle which is recorded in an embodiment of the engine according to the invention, in comparison with a conventional solution,
- figure 10 is a further diagram showing the change of the Turbulent Kinetic Energy (TKE) as a function of the crank angle, in the case of an embodiment of the engine according to the invention, in comparison with a conventional solution,
- figure 11 is a diagram showing the fuel injection strategy in the engine according to the invention,
- figure 12 is a further schematic view of the combustion chamber of the engine according to the invention,
- figure 13 shows a further example of fuel injection strategy in the engine according to the invention, and
- figures 14 and 15 are sectional views of the upper part and the lower part of a fuel injector used in the preferred embodiment of the engine according to the invention.

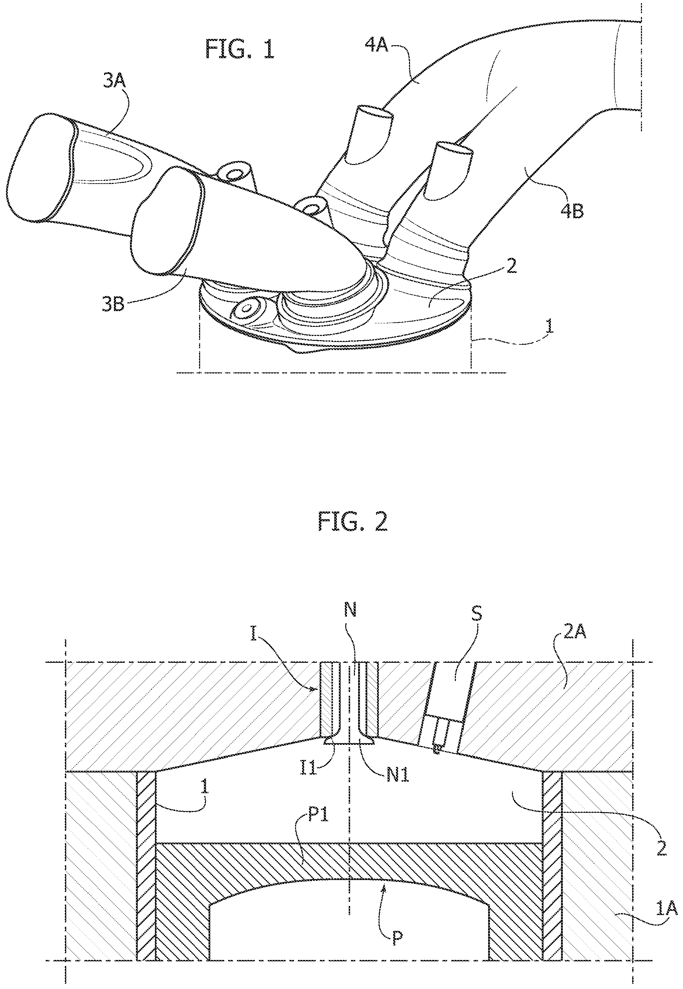

In figure 1, the reference 1 indicates a cylinder of a spark-ignition internal combustion engine, according to the invention, defined in a manner known per se within an engine block, to which a combustion chamber 2 is associated, defined in a cylinder head of the engine. Two intake ducts 3A, 3B lead into the combustion chamber 2 and are shaped and arranged according to any known technique, so as to introduce respective air flows into the cylinder 1, generating, when the two intake valves are opened simultaneously and identically, a flow field characterized only by tumble components, said ducts being configured to maximize the filling of the cylinder without producing turbulence. The two intake ducts 3A, 3B communicate with a common intake manifold (not shown) in such a way as to both receive air at the same pressure. The two ducts 3A, 3B are reconfigured and arranged in such a way that the two air flows introduced by them into the cylinder tend to have components suitable for favoring the filling of the cylinder, rather than the generation of turbulence. Specifically, said ducts are such as to generate, when the valves open with substantially identical laws of motion, a flow field characterized only by tumble.

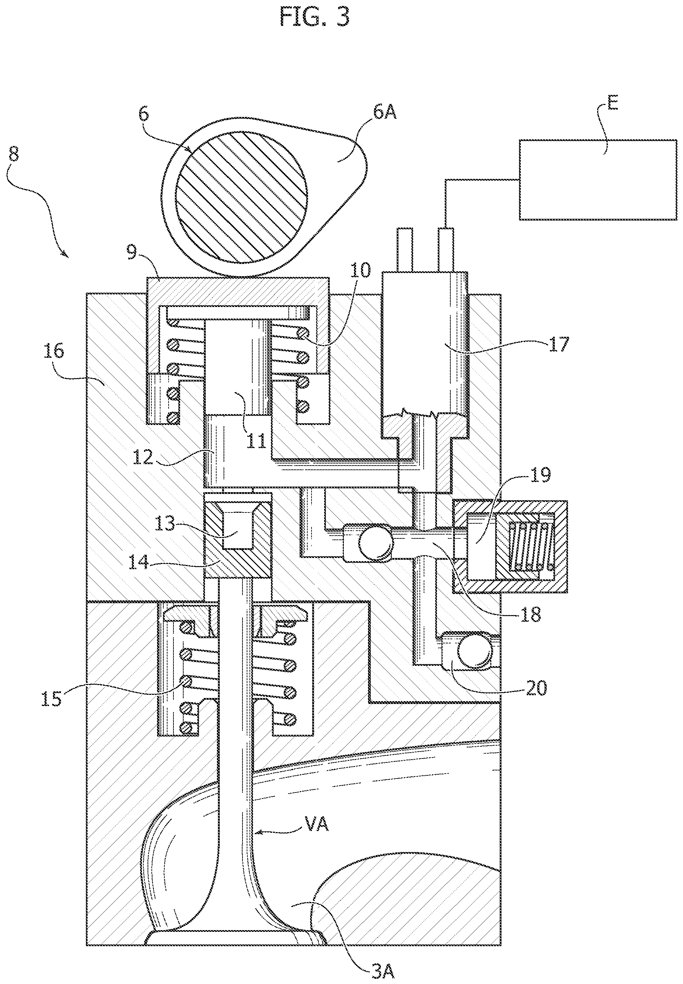

According to the conventional technique, the two intake ducts 3A, 3B are associated with two respective intake valves VA and VB, one of which can be seen for example in figure 3. The valves VA and VB are of the conventional poppet type, with stem and circular head.

Also associated with each cylinder 1 are two exhaust ducts 4A, 4B (figure 1) communicating with an exhaust manifold.

Figure 2 shows the engine block 1A within which the cylinder 1 is defined, and the piston P (schematically showed) slidably mounted within the cylinder 1 and having a piston head P1 facing the combustion chamber 2. The reference 2A indicates the cylinder head, defining the combustion chamber 2.

The fuel supply system is a supply system of any known type, comprising, for each cylinder, a fuel injector I. Figure 2 shows only the nozzle end part of the injector I.

An important feature of the engine according to the invention is that the injector I is arranged in the center of the combustion chamber 2. A spark plug S of any known type is also mounted in the cylinder head 2A so as to have its electrodes, also substantially in the center of the combustion chamber 2, adjacent to the nozzle of the injector I.

As shown schematically in figure 2, the injector I is preferably of the type comprising an injector needle N, having an enlarged cone-shaped terminal head N1, arranged outside the outlet I1 of the nozzle of the injector I. According to the conventional technique, the injector I has an electromagnetic actuator which is capable of imparting an outwardly movement to the injector needle N, which causes the cone-shaped head N1 to move away from the outlet I1 of the injector nozzle, to allow the fuel injection into the combustion chamber 2. A particular type of injector I which is suitable for the application illustrated here has been developed by the Applicant and has been the subject of the Italian patent applications IT 10 2022 0000 13627 and IT 10 2022 0000 13636, both filed on 06.28.2022.

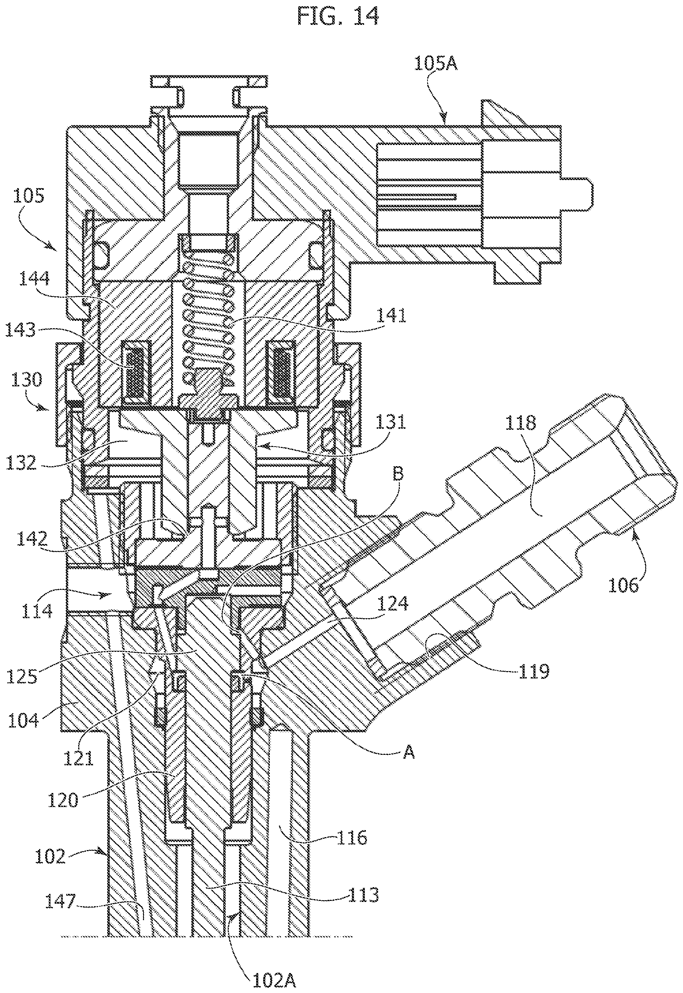

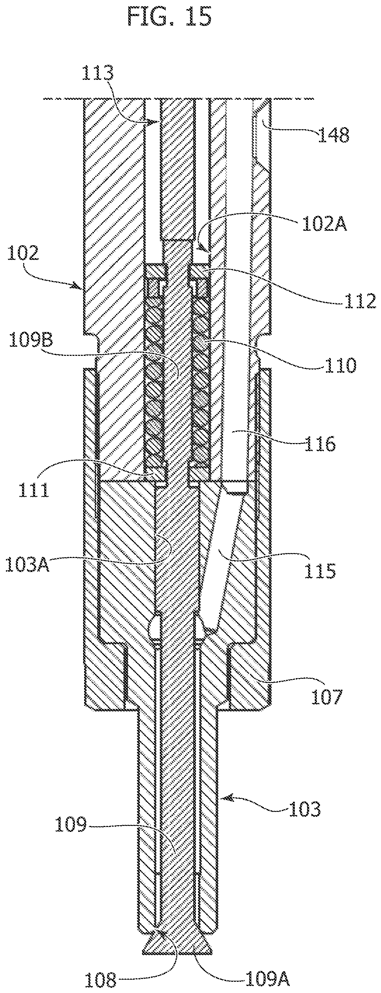

A preferred embodiment of this injector is shown in figures 14 and 15 (which show sectional views of the upper part and the lower part of the injector respectively).

With reference to these figures, the injector device comprises a body 102 having an elongated cylindrical shape, terminating at its lower end (with reference to figure 15) with an injector nozzle 103. At its upper end, the injector body 102 includes a portion 104 containing a hydraulic servo-valve 114 configured to actuate the injector needle 109 and controlled by an electromagnetic actuator 130 carried by an upper end portion 105 of the injector body, with which a connector element 105A is associated for the electrical connection of an actuator power supply cable.

In the exemplary embodiment described here, the portion 104 of the injector body 102 is associated with a fitting 106 defining an inlet opening for a liquid (for example oil or water) under pressure, serving for the actuation of the hydraulic servo-valve 114, as will be explained in detail below. The body 102 also has an inlet opening 148 (figure 15), better described below, intended to receive pressurized fluid (gas or liquid) to be injected into the internal combustion engine.

In the illustrated exemplary embodiment, the nozzle 103 of the injector device is defined by a bushing removably fixed to the lower end of the injector body 102 (see figure 15) by a further internally threaded bushing 107 which is screwed onto a threaded portion at the lower end of the injector body 102.

The body of the nozzle 103 ends with an outlet 108 which acts as a valve seat, having a conical shape, cooperating with a terminal head 109A, also having a conical shape, of an injector needle 109.

The injector needle 109 is slidably mounted within an axial cylindrical cavity 103A of the bushing constituting the nozzle 103 and is recalled towards a raised position (with reference to figure 15), in which the terminal head 109A closes the outlet 108, by a coil spring 110. In the example illustrated, the coil spring 110 is received within an axial cylindrical cavity 102A of the injector body 2 and has a lower end in contact with a washer 111 resting against an upper end surface of the bushing constituting the nozzle 103, and an upper end tending to push the injector needle 109 upwards, via a ring 112 rigidly connected to an upper portion 109B of the injector needle 9 which is inserted through the coil spring 110. Of course, these construction details are illustrated here purely by way of non-limiting example.

With reference again to figure 15, the injector needle 109 can be moved away from its rest position shown in figure 15, in which the terminal head 109A of the needle blocks the outlet 108, following the thrust exerted, against the action of the coil spring 110, by a stem 113 controlled, in the manner which is illustrated below, by the hydraulic servo-valve 114.

With reference again to figure 15, the passage defined by the nozzle 103 is in communication, by holes 115 and 116, with the inlet opening 148, intended to communicate with a supply pipe of the pressurized fluid (liquid or gas) to be injected in the engine.

With reference to figure 14, the inlet fitting 106 defines an inlet opening 118 for a pressurized liquid serving for the actuation of the hydraulic servo-valve 114. The inlet fitting 106 of the injector device consists of a cylindrical element screwed into a seat 119 of the portion 104 of the injector body 102 within which the hydraulic servo-valve 114 is arranged.

Thanks to the arrangement described above, when the injector needle 109 is moved outwards (i.e. downwards, with reference to figure 15) the pressurized fluid supplied to the inlet opening 148 can flow through the passage defined by the holes 116 and 115 in the internal passage of the nozzle 103 and then it can exit the outlet 108 to be injected into the combustion chamber of the respective cylinder of an internal combustion engine.

The servo-valve 114 includes a piston 125, defined by an enlarged portion of the stem 113. The piston 125 is interposed between two hydraulic chambers A and B which are both communicating with the inlet opening 118 for the pressurized liquid serving for the actuation of the hydraulic servo-valve 114. The opposite faces of the piston 125 which face the chambers A and B have substantially equal surfaces so that the pressure existing in the chambers A and B does not generate any movement of the stem 113. When the electromagnetic actuator 130 is excited, a shutter 131 opens a communication of the chamber A with a low pressure discharge chamber 132, whereby the chamber A empties and the chamber B pushes the stem 113 against the needle 109, causing it to move outwards of the head 109A of the plug 109, with the consequent emission of a fuel jet into the space defined between the outlet 108 and the cone-shaped head 109A.

In a preferred exemplary embodiment, the invention is applied to an internal combustion engine equipped with a variable actuation system of the engine intake valves of the type developed by the same Applicant and marketed under the trademark Multi-Air.

Figure 3 shows schematically an example of the Multi-Air variable actuation system. In this case, each of the intake valves VA, VB (figure 3 shows the device associated with the valve VA) is actuated by a respective cam 6A of a camshaft 6 of the engine by means of an electronically controlled hydraulic device 8. The cam 6 actuates a tappet 9 kept in contact with the cam 6 by a return spring 10. The tappet 9 is associated with the piston 11 of a master cylinder which transfers pressurized fluid from a chamber 12 to the chamber of a slave cylinder 13 whose piston 14 serves as an actuator of the intake valve VA. The intake valve VA is recalled by a spring 15 towards a closed position of the intake duct 3A. All of the above components are carried by the engine cylinder head structure 16. An electronically controlled valve 17 is controlled by an electronic control unit E. When the electronically controlled valve is in a closed condition, it interrupts the communication between the pressurized fluid chamber 12 and a low pressure space 18, communicating with a fluid accumulator 19 and with an inlet 20 intended to be in communication with the engine lubrication circuit. If the electronically controlled valve 17 is in the closed condition, the pressurized fluid chamber 12 is isolated, whereby the movements of the tappet 9 imparted by the cam 6 can be transferred, via the fluid in the chamber 12 and the slave cylinder 13, to the intake valve VA. In a condition in which the cam 6 is keeping the intake valve VA open, an opening of the electronically controlled valve 17 actuated by the electronic control unit L causes the discharge of the pressurized fluid chamber 12 and the consequent closure of the valve intake VA due to the effect of the return spring 15. In this condition, the intake valve VA is insensitive to the movements of the tappet 9 imparted by the cam 6.

This description is provided here purely as an indication of the basic operating principle of the Multi-Air system. The Applicant has developed various embodiments of this system which have been the subject of various patent publications.

However, it is understood that the invention can also be used in combination with variable actuation systems for actuating the intake valves of different types, for example electromagnetic or electropneumatic actuation systems.

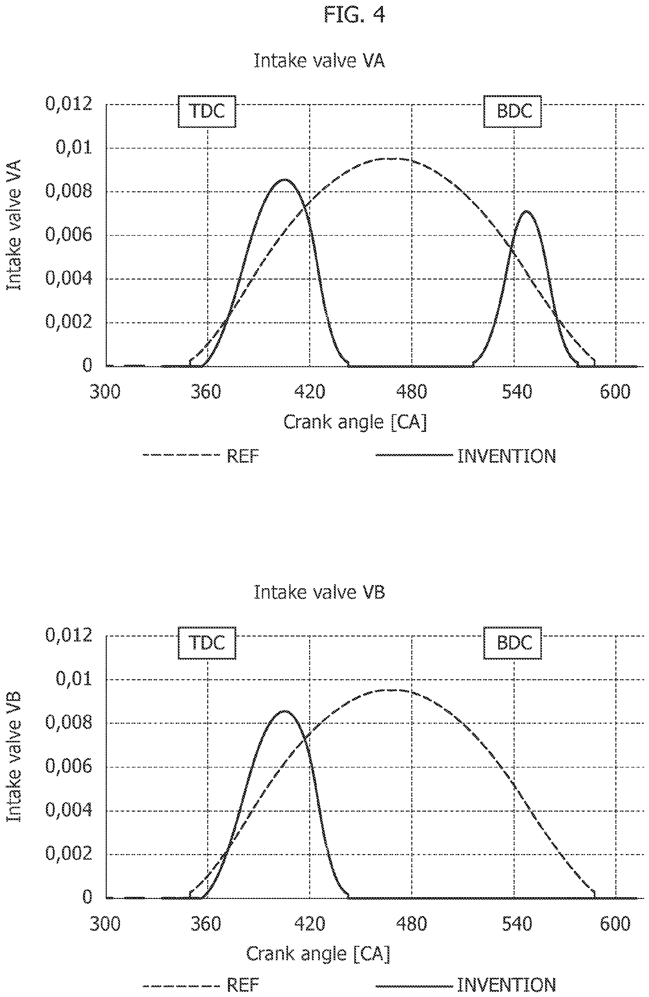

Thanks to the arrangement, for each of the two intake valves VA, VB of each cylinder, of a variable actuation system, for example of the Multi-Air type, it is possible to implement the strategy for opening the intake valves which is one of the fundamental elements of this invention. This strategy is shown in figure 4 of the accompanying drawings, with reference to an example. The upper diagram of figure 4 shows the lift profiles of the first intake valve VA, while the lower diagram of figure 4 shows the lift profile of the second intake valve VB.

In both diagrams, the dashed line shows the lift profile of each intake valve which is achieved in a conventional solution, with mechanical actuation of the intake valves. The dashed line profile substantially corresponds to the lift profile determined by the cam 6 (figure 3) cooperating with the tappet 9.

In the above diagrams, the abscissa axis shows the crank angle values. According to the convention adopted, when the piston of a given cylinder is at TDC, at the beginning of the conventional intake stage of the operating cycle in the cylinder, the crank angle is equal to 360°. With reference again to the conventional solution, at the end of the intake stage, when the piston has reached the BDC, the crank angle is equal to 540°.

According to the invention, the variable actuation device of the two intake valves VA and VB is configured in such a way that it achieves a first opening period, which in the example shown in figure 4 starts at a crank angle substantially equal to 360° and ends at a crank angle around 440°, where both inlet valves VA and VB are first opened and then closed. As can be seen, the lift diagram of each intake valve is very steep and would in practice be unattainable with a conventional system of the mechanical type, in which the lift profile is determined by the cam profile.

With reference again to the engine according to the invention, as can therefore be seen, a first opening period is achieved in which both intake valves are substantially opened when the piston of the respective cylinder is at TDC, at the beginning of the intake stage, and are closed when the piston is at an intermediate point in the descent from the TDC to the BDC.

Still according to the invention, a second opening period is achieved, in which only the first intake valve VA is first opened and then closed again, while the second intake valve VB remains closed. As can be seen in figure 4, in the case of the illustrated example, the second opening period, in which only the intake valve VA is opened, starts in proximity of the BDC (in the example around 520°) and ends when the piston is already ascending from BDC to TDC, i.e. in the subsequent compression stage (in the example at an angle around 580°).

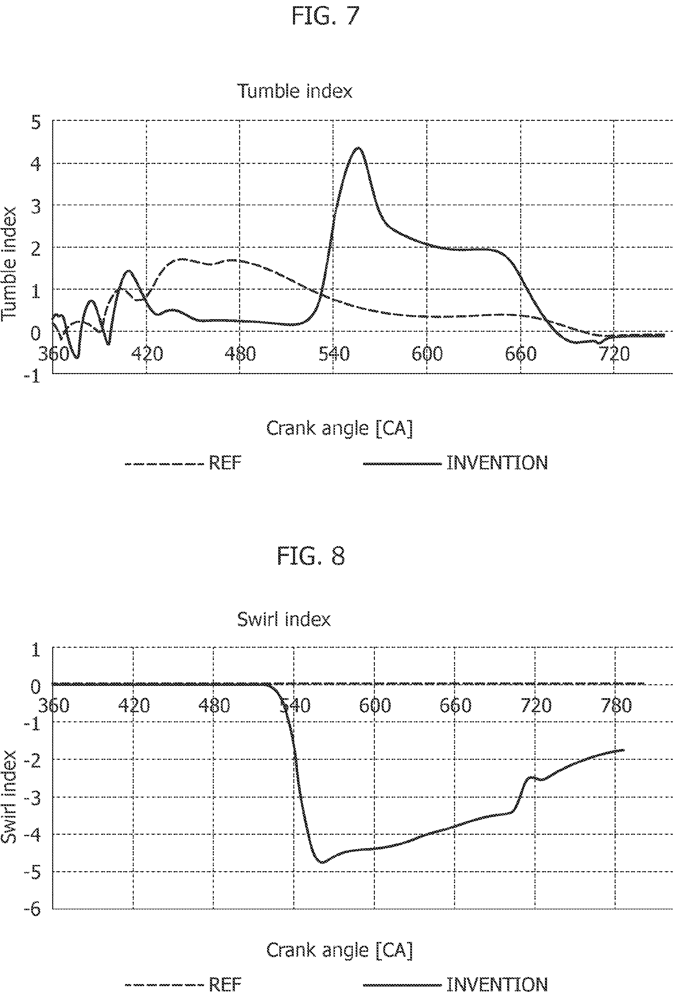

The strategy for opening the intake valves, implemented according to this invention, is aimed at obtaining a series of specific effects. During the first opening period, when both the intake valves VA and VB are opened, the air flows introduced through the intake ducts 3A, 3B have only tumble components, so that the overall swirl motion resulting in the cylinder following of the first opening period is substantially zero or almost zero (see figure 8 in the range between 360° and 450° of the crank angle). Conversely, in the second opening period, when only the intake valve VA is opened, the air flow introduced through a single intake duct takes a swirl component in the cylinder (see figure 8, in the range following 540° of the crank angle). In the diagrams of figures 7, 8 and 9 the changes of the tumble, swirl and cross-tumble index are shown in comparison with a conventional solution (dashed line) in which both intake valves together follow a conventional lift profile, corresponding to the profile of their drive cam.

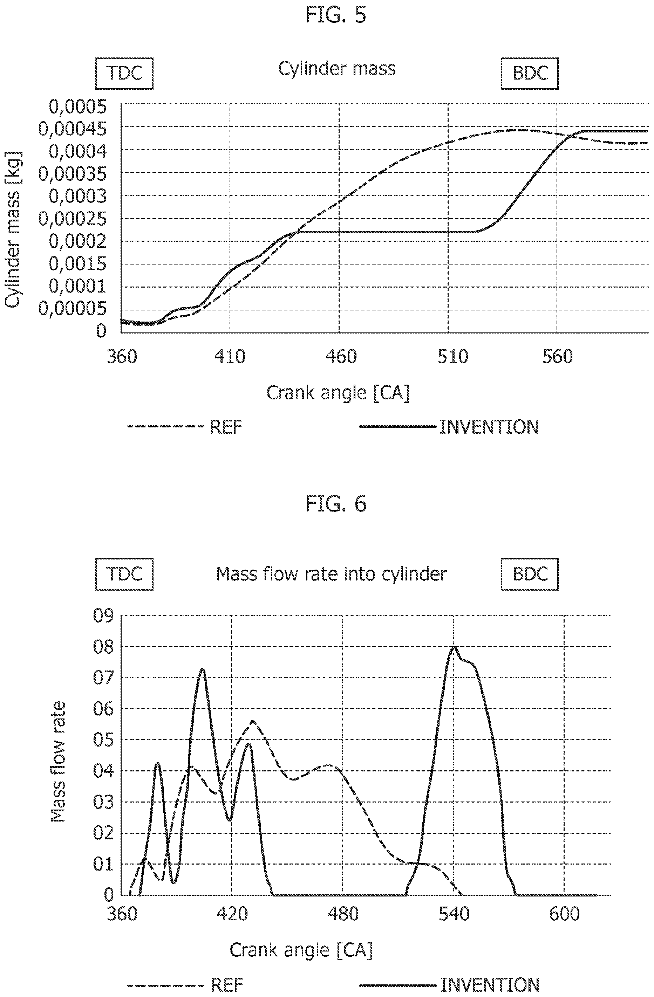

Figure 5 shows the change of the mass of air introduced into the cylinder as a function of the crank angle, in the case of the valve opening strategy according to figure 4, i.e. according to the teachings of this invention, in comparison with the change of the air charge in a conventional solution (shown with dashed line). The same comparison is indicated in figure 6, but with reference to the introduced airflow rate (in Kg/s).

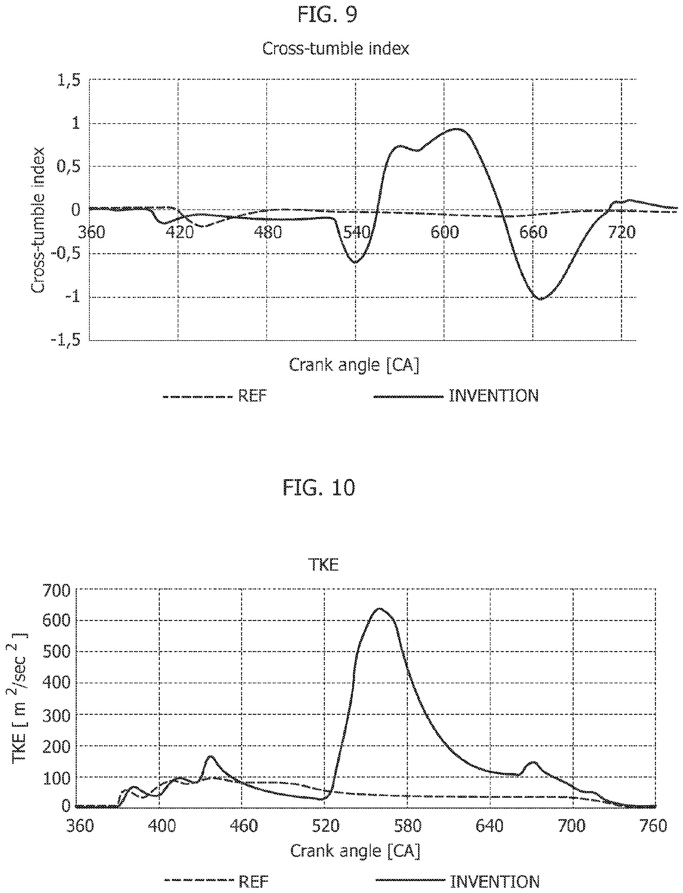

Figure 10 is a diagram showing the change of turbulent kinetic energy in the engine according to the invention (solid line) and a conventional solution (dashed line). The effect of the strategy for opening the inlet valves shown in figure 4 is positive: at a crank angle of 720°, i.e. when the piston is at TDC and the spark plug is fired, the TKE is about double that of the conventional engine. This is possible because most of the TKE is generated in a delayed manner, i.e. only during the second opening, so as to delay its dissipation. As known, the dissipation of the TKE is proportional to the cube of the TKE itself, that is why avoiding the generation of TKE during the first opening of the valves, when the piston travels the first half of the intake stroke from TDC to BDC, has the double effect of avoiding dissipative phenomena, that would uselessly heat the air charge (increase of the knocking tendency) and maximizing the cylinder filling.

In order to obtain the advantages pursued by this invention, it is necessary to combine the strategy for opening the intake valves which has been described above with a specific fuel injection strategy.

In the engine according to the invention, the fuel supply system is configured to perform at least one fuel injection, through the central injector I, after said second opening period, when the piston of the respective cylinder is ascending from BDC to TDC.

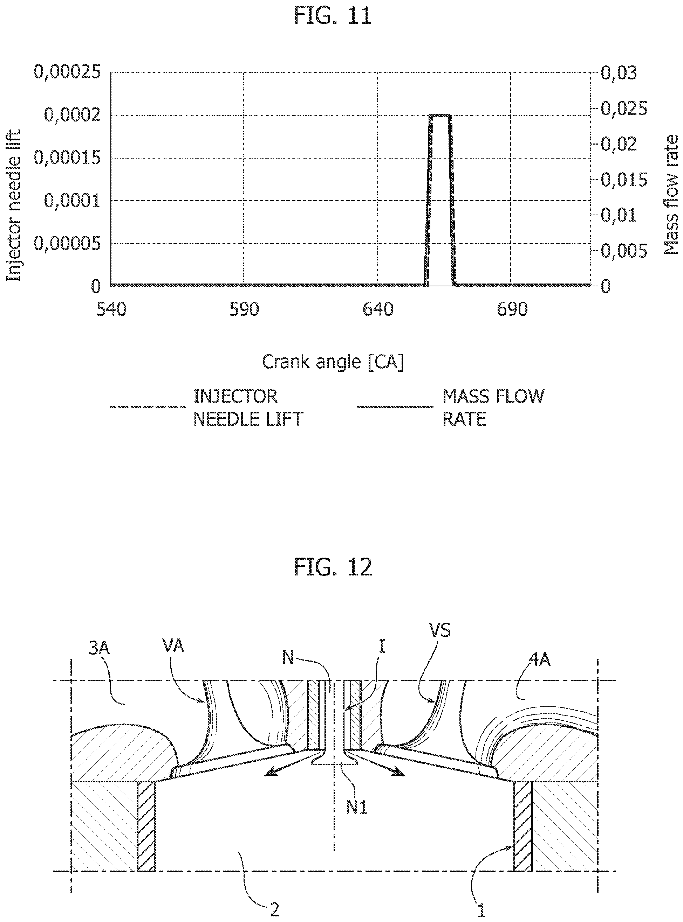

In the example shown in figure 11, the injection is provided substantially around the 660° of the crank angle. Figure 11 shows the lift profile of the injector needle with a solid line, while the change of the injected fuel flow rate (in Kg/s) is shown with a dashed line.

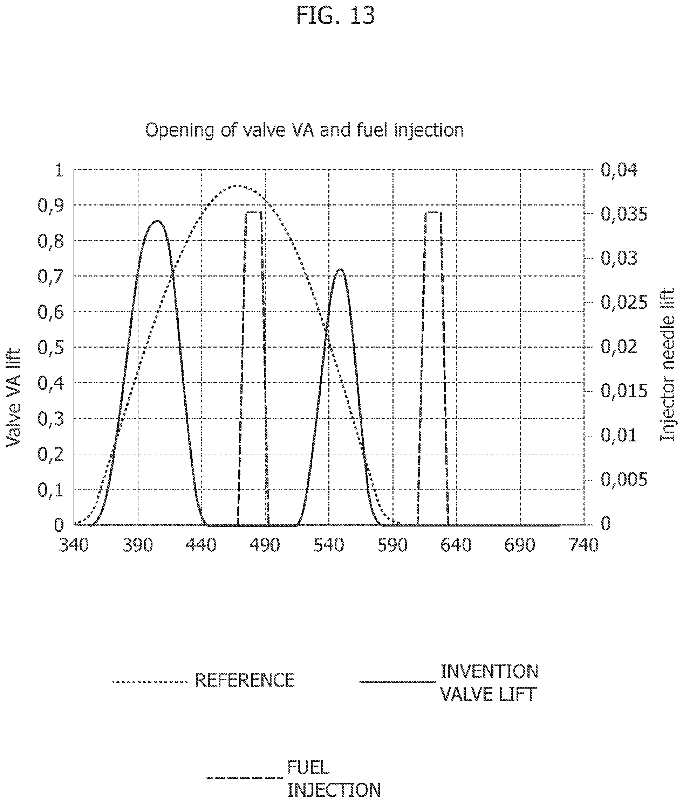

In the variant shown in figure 13, before said injection following the second opening period, a further injection is provided in a range of the crank angle comprised between the first opening period and the second opening period of the intake valves.

Preferably, in the injection performed just after the first opening period of the intake valves, the fuel is injected in such a way as to give rise to an ultra-lean mixture, i.e. with an air/fuel ratio equal to at least 1.5 - 2 times the stoichiometric ratio. On the contrary, in the second injection, i.e. the injection which is performed after the second opening period, in which a single intake valve opens, the fuel introduced is such as to create a mixture with a stoichiometric ratio only in the region in proximity of the spark plug. This subsequent fuel injection is performed when a swirl motion of the charge introduced during the second opening period has already been established in the cylinder, in which only one intake valve opens. Consequently, in the combustion chamber a central zone is created inside the swirl vortex, adjacent to the injector and the spark plug, in which an air/fuel ratio substantially equal to the stoichiometric value is achieved, while outside the swirl vortex, the mixture obtained is an ultra-lean mixture which remains separate from the swirl vortex itself with respect to the stoichiometric mixture which is at the center of the combustion chamber.

Thanks to these features, the losses due to the cooling determined by the contact of the mixture with the walls of the cylinder are minimized and a stratified charge is created inside the cylinder. When the spark plug is fired, an efficient and robust combustion of the central portion of the mixture is achieved, which corresponds to the stoichiometric value, resulting in a propagation of the combustion to the outermost zones of the combustion chamber, where the mixture is ultra-lean: as known, the combustion of ultra-lean mixtures suffers from combustion instability (reduced flame propagation rate). Thanks to the first part of the combustion, which involves the region with a stoichiometric fuel-air ratio and therefore is extremely fast, also thanks to the higher TKE (compared to the reference case) generated by the second opening of the valve 1, the flame propagation takes place in a robust and repeatable way up to the cylinder wall, i.e. also in the ultra-lean region.

As already indicated, the lift profiles of the intake valves required for this invention (see figure 4) need the use of a variable actuation device which is capable of performing the two sequential opening and closing cycles of the first intake valve in a range of 200°-240° of the crank angle and is capable of achieving each lift profile of each intake valve with a very steep up and down ramp (i.e. with an almost rectangular profile).

The variable actuation system of the engine valves allows to change the opening stage of the first intake valve during said second opening period, depending on engine load and engine speed. In this way it is possible to adjust very efficiently the swirl level established in the second opening period in each operating condition of the engine. The result is that the engine according to the invention is capable of drastically reducing losses due to cooling resulting from the contact of the mixture in the combustion chamber with the cylinder walls at all points of the engine operating plan.

A further advantage derives from the use of a central injector with an injector needle having an outwardly opening movement, with a cone-shaped head which produces a radial jet substantially according several radial directions almost perpendicular to the cylinder axis, which avoids reaching the piston surface when the piston is in proximity of the TDC, with the consequent phenomenon of "wall impingement" of the drops and the formation of particulate matter and carbonaceous emissions.

Of course, the principle of the invention remaining the same, the construction details and embodiments may change widely with respect to what is described and illustrated purely by way of example, without thereby departing from the scope of this invention, as defined in the appended claims.

Specifically, what has been said is also intended to apply when recirculated exhaust gas (EGR, from "Exhaust Gas Recirculation) mixed with the air charge is introduced during the intake stage: in fact, the invention is suitable for generic diluted combustion, where the dilution can take place by means of an excess of air, by adding EGR or by adding both.

Specifically, in the case of only adding EGR, but a mixture with an almost stoichiometric strength, it is possible, by means of a second fuel injection, which takes place during the compression stroke, in proximity of the TDC, to locally reduce the EGR mass fraction in proximity of the spark plug by enriching the fuel mass fraction. Finally, again in the case of dilution obtained only by EGR, the invention is suitable for supporting mixtures with percentages of EGR in a range of 25%-35% of the charge.

Finally, what has been said also applies if the fuel mass is divided into two parts, one of which, about 80-90% of the total, is introduced through the intake ducts, already mixed with the air, for example having been introduced by injectors placed on the intake ducts, and the remaining part, about 10-20%, is introduced by direct injection into the combustion chamber.

The latter variant also includes the case in which two different fuels are introduced into the combustion chamber, for example an ultra-lean mixture of air and natural gas or air and hydrogen could be introduced through the intake ducts, and then liquid fuel can be injected such as petrol or diesel from the injector facing the combustion chamber.

## Claims

1. Spark-ignition internal combustion engine, comprising one or more cylinders (1) and respective pistons sliding within the cylinders between a TDC and a BDC and operatively connected to a crankshaft, said engine being configured to carry out successive intake, compression, expansion and exhaust stages during each operating cycle in each cylinder,
wherein the engine includes, for each cylinder:
- a first intake duct (3A) and a second intake duct (3B) leading into the cylinder and configured to receive air at the same pressure,
- a first intake valve (VA) and a second intake valve (VB) associated with the cylinder (1), to control the entry into the cylinder of a flow of intake air from the first intake duct (3A) and from the second intake duct (3B), respectively, during each cylinder operating cycle,
- an actuation device (6) for actuating said first intake valve (VA) and said second intake valve (VB),
- a fuel supply system comprising at least one injector associated with each cylinder, and configured and arranged to feed fuel into a combustion chamber defined in the respective cylinder, during each operating cycle of the cylinder, and
- a spark plug associated with each cylinder,
wherein:
- said actuation device for actuating said first intake valve (VA) and said second intake valve (VB) is configured to provide, in each cylinder operating cycle, at least under certain operating conditions of the engine:
- a first opening period, in which both intake valves (VA, VB) are opened and a second opening period, in which only a first intake valve (VA), of said two intake valves, is opened, while the second intake valve (VB) remains closed,
- said injector is arranged substantially in the center of the respective combustion chamber,
said engine being **characterized in that**:
- in said first opening period the two intake valves (VA, VB) open when the piston of the respective cylinder is in proximity of the TDC and close when the piston is at an intermediate point in the descent from TDC to BDC,
- in said second opening period said first intake valve (VA) opens when the piston of the respective cylinder is in proximity of the BDC, and closes when the piston is ascending from BDC to TDC,
- said injector has an injector needle (109) having a cone-shaped terminal head (109A) cooperating with a nozzle outlet (108) of the injector and having an outwardly opening movement, in which the cone-shaped head (109A) moves away from the outlet (108) of the injector nozzle (103) to feed fuel into the cylinder,
- said fuel supply system is configured to perform at least one fuel injection, via said injector, in each operating cycle of each cylinder, after said second opening period, when the piston of the respective cylinder is ascending from BDC to TDC,
- in such a way that said fuel injection creates a portion of air-fuel mixture in the cylinder located inside the swirl flow created in said second opening period, and kept separate by said swirl flow with respect to the charge introduced in the first opening period, which charge is more adjacent to the cylinder walls.

2. Engine according to claim 1, **characterized in that** it comprises a hydraulic servo-valve (114), with electromagnetic activation, for actuating the outwardly opening movement of said injector needle.

3. Engine according to claim 1, **characterized in that** said fuel supply system is configured to perform a further fuel injection between the first opening period and the second opening period.

4. Engine according to claim 3, **characterized in that** said further fuel injection is carried out in such a way as to give rise to a mixture with an air/fuel ratio equal to at least 1.5 times the stoichiometric ratio, while the fuel injection after the second opening period is carried out in such a way that the mixture portion inside the swirl flow has an air/fuel ratio substantially equal to the stoichiometric value.

5. Engine according to claim 1, **characterized in that** said at least one fuel injection is carried out at a crank angle in a range between 660° and 710°, considering that the TDC at the beginning of the intake stage is equal to 360°.

6. Engine according to claim 3, **characterized in that** said fuel supply system is configured to perform the further fuel injection between a crank angle of 420° and a crank angle of 550°, considering that the TDC at the beginning of the intake stage is equal to 360°.

7. Engine according to claim 1, wherein the actuation device for actuating the intake valves is an electronically controlled hydraulic actuation device (8) or a device with electromagnetic or electropneumatic actuators and is configured to change, in said second period opening, the crank angle at which the first intake valve opens and/or the crank angle at which the first intake valve closes and/or the lift of the intake valve, depending on engine load and engine speed.

8. Engine according to claim 1, **characterized in that** the injector associated with each cylinder is arranged in the center of the combustion chamber associated with the cylinder.

9. Engine according to claim 1, **characterized in that** with each cylinder there is associated a spark plug arranged near the center of the combustion chamber.

10. Method for controlling a spark-ignition internal combustion engine, comprising one or more cylinders (1) and respective pistons sliding within the cylinders between a TDC and a BDC and operatively connected to a crankshaft, said engine being configured to actuate successive intake, compression, expansion and exhaust stages during each operating cycle in each cylinder,
wherein the engine includes, for each cylinder:
- a first intake duct (3A) and a second intake duct (3B) leading into the cylinder and configured to receive air at the same pressure,
- a first intake valve (VA) and a second intake valve (VB) associated with the cylinder (1), to control the entry into the cylinder of a flow of intake air from the first intake duct (3A) and from the second intake duct (3B), respectively, during each cylinder operating cycle,
- an actuation device (6) for actuating said first intake valve (VA) and said second intake valve (VB),
- a fuel supply system comprising at least one injector associated with each cylinder, and configured and arranged to feed fuel into a combustion chamber defined in the respective cylinder, during each operating cycle of the cylinder, and
- a spark plug associated with each cylinder,
said method including:
- providing, by means of said actuation device for actuating said first intake valve (VA) and said second intake valve (VB), in each operating cycle of the cylinder, at least under certain operating conditions of the engine, a first opening period, in which both intake valves (VA, VB) are opened and a second opening period, in which only a first intake valve (VA), of said two intake valves, is opened, while the second intake valve (VB) remains closed,
- performing a fuel injection in each operating cycle of each cylinder, by means an injector arranged substantially in the center of the respective combustion chamber,
said method being **characterized in that**:
- in said first opening period the two intake valves (VA, VB) open when the piston of the respective cylinder is in proximity of the TDC and close when the piston is at an intermediate point in the descent from TDC to BDC,
- in said second opening period said first intake valve (VA) opens when the piston of the respective cylinder is in proximity of the BDC, and closes when the piston is ascending from BDC to TDC,
- wherein said injector has an injector needle (109) having a cone-shaped terminal head (109A) cooperating with a nozzle outlet (108) of the injector, said injector needle (109) having an outwardly opening movement, in which the cone-shaped head (109A) moves away from the outlet (108) of the injector nozzle (103) to feed fuel into the cylinder,
said method further comprising:
- performing at least one fuel injection after said second opening period, when the piston of the respective cylinder is ascending from BDC to TDC
- in such a way that said fuel injection creates a portion of air-fuel mixture in the cylinder located inside the swirl flow created in said second opening period, and kept separate by said swirl flow with respect to the charge introduced in the first opening period, which charge is more adjacent to the cylinder walls.

11. Method according to claim 10, **characterized in that** it comprises performing a further fuel injection between the first opening period and the second opening period,
and wherein preferably with the injection carried out between the first opening period and the second opening period, a portion is introduced between 80% and 90% of the total quantity of fuel injected in each operating cycle of the cylinder, while with the injection carried out after said second opening period, the remaining portion of fuel is introduced.

12. Method according to claim 11, **characterized in that** said further fuel injection is carried out in such a way as to give rise to a mixture with an air/fuel ratio equal to at least 1.5 times the stoichiometric ratio, while the fuel injection after the second opening period is carried out in such a way that the mixture portion inside the swirl flow has an air/fuel ratio substantially equal to the stoichiometric value.

13. Method according to claim 10, **characterized in that** it comprises diluting the charge in the cylinder by adding EGR, preferably in a range of 25%-35% of the charge, and/or by adding excess air.

14. Method according to claim 10, **characterized in that** it comprises feeding a gaseous fuel through at least one injector arranged in one of the intake ducts and feeding liquid fuel through an injector directly facing the combustion chamber.

## Patentansprüche

1. Verbrennungsmotor mit Fremdzündung, umfassend einen oder mehrere Zylinder (1) und jeweilige Kolben, die sich innerhalb der Zylinder zwischen einem OT und einem UT gleiten und betriebsmäßig mit einer Kurbelwelle verbunden sind, wobei besagter Motor konfiguriert ist, um in jedem Betriebszyklus in jedem Zylinder aufeinanderfolgende Ansaug-, Verdichtungs-, Expansions- und Auslassphasen durchzuführen,
wobei der Motor für jeden Zylinder einschließt:
- einen ersten Ansaugkanal (3A) und einen zweiten Ansaugkanal (3B), die in den Zylinder führen und konfiguriert sind, um Luft mit demselben Druck aufzunehmen,
- ein erstes Einlassventil (VA) und ein zweites Einlassventil (VB), die dem Zylinder (1) zugeordnet sind, um den Eintritt eines Ansaugluftstroms aus dem ersten Ansaugkanal (3A) bzw. aus dem zweiten Ansaugkanal (3B) in den Zylinder während jedes Zylinderbetriebszyklus zu steuern,
- eine Betätigungseinrichtung (6) zum Betätigen besagten ersten Einlassventils (VA) und besagten zweiten Einlassventils (VB),
- ein Kraftstoffversorgungssystem, das mindestens einen Einspritzer umfasst, der jedem Zylinder zugeordnet ist, und konfiguriert und angeordnet ist, um Kraftstoff während jedes Betriebszyklus des Zylinders in eine Brennkammer einzuspeisen, die in dem jeweiligen Zylinder definiert ist, und
- eine Zündkerze, die jedem Zylinder zugeordnet ist,
wobei:
- besagte Betätigungseinrichtung zum Betätigen besagten ersten Einlassventils (VA) und besagten zweiten Einlassventils (VB) konfiguriert ist, um in jedem Zylinderbetriebszyklus, zumindest unter bestimmten Betriebsbedingungen des Motors, bereitzustellen:
- eine erste Öffnungsperiode, in der beide Einlassventile (VA, VB) geöffnet sind, und eine zweite Öffnungsperiode, in der nur ein erstes Einlassventil (VA) der besagten zwei Einlassventile geöffnet ist, während das zweite Einlassventil (VB) geschlossen bleibt,
- besagter Einspritzer im Wesentlichen in der Mitte der jeweiligen Brennkammer angeordnet ist,
wobei besagter Motor **dadurch gekennzeichnet ist, dass**:
- in besagter ersten Öffnungsperiode die beiden Einlassventile (VA, VB) öffnen, wenn der Kolben des jeweiligen Zylinders in der Nähe des OT ist, und schließen, wenn der Kolben sich an einem Zwischenpunkt im Abstieg von OT zu UT befindet,
- in besagter zweiten Öffnungsperiode besagtes erstes Einlassventil (VA) öffnet, wenn der Kolben des jeweiligen Zylinders in der Nähe des UT ist, und schließt, wenn der Kolben von UT zu OT aufsteigt,
- besagter Einspritzer eine Einspritzdüsenadel (109) mit einem kegelförmigen Endkopf (109A) aufweist, der mit einer Düsenaustrittsöffnung (108) des Einspritzers zusammenwirkt und eine nach außen öffnende Bewegung aufweist, bei der sich der kegelförmige Kopf (109A) von der Austrittsöffnung (108) der Einspritzdüse (103) wegbewegt, um Kraftstoff in den Zylinder einzuspeisen,
- besagtes Kraftstoffversorgungssystem konfiguriert ist, um mindestens eine Kraftstoffeinspritzung über besagten Einspritzer in jedem Betriebszyklus jedes Zylinders nach besagter zweiten Öffnungsperiode durchzuführen, wenn der Kolben des jeweiligen Zylinders von UT zu OT aufsteigt,
- auf solche Weise, dass besagte Kraftstoffeinspritzung einen Teil des Luft-Kraftstoff-Gemischs im Zylinder erzeugt, der sich innerhalb der in besagter zweiten Öffnungsperiode erzeugten Drallströmung befindet und durch besagte Drallströmung von der in der ersten Öffnungsperiode eingebrachten Ladung getrennt gehalten wird, wobei diese Ladung näher an den Zylinderwänden liegt.

2. Motor nach Anspruch 1, **dadurch gekennzeichnet, dass** er ein hydraulisches Servoventil (114) mit elektromagnetischer Aktivierung zum Betätigen der nach außen öffnenden Bewegung besagter Einspritzdüsenadel umfasst.

3. Motor nach Anspruch 1, **dadurch gekennzeichnet, dass** besagtes Kraftstoffversorgungssystem konfiguriert ist, um eine weitere Kraftstoffeinspritzung zwischen der ersten Öffnungsperiode und der zweiten Öffnungsperiode durchzuführen.

4. Motor nach Anspruch 3, **dadurch gekennzeichnet, dass** besagte weitere Kraftstoffeinspritzung so durchgeführt wird, dass sie ein Gemisch mit einem Luft-Kraftstoff-Verhältnis von mindestens dem 1,5-fachen des stöchiometrischen Verhältnisses ergibt, während die Kraftstoffeinspritzung nach der zweiten Öffnungsperiode so durchgeführt wird, dass der Gemischanteil innerhalb der Drallströmung ein Luft-Kraftstoff-Verhältnis im Wesentlichen gleich dem stöchiometrischen Wert aufweist.

5. Motor nach Anspruch 1, **dadurch gekennzeichnet, dass** besagte mindestens eine Kraftstoffeinspritzung bei einem Kurbelwinkel in einem Bereich zwischen 660° und 710° durchgeführt wird, wobei der OT zu Beginn der Ansaugphase gleich 360° betrachtet wird.

6. Motor nach Anspruch 1, **dadurch gekennzeichnet, dass** besagtes Kraftstoffversorgungssystem konfiguriert ist, um die weitere Kraftstoffeinspritzung zwischen einem Kurbelwinkel von 420° und einem Kurbelwinkel von 550° durchzuführen, wobei der OT zu Beginn der Ansaugphase gleich 360° betrachtet wird.

7. Motor nach Anspruch 1, wobei die Betätigungseinrichtung zum Betätigen der Einlassventile eine elektronisch gesteuerte hydraulische Betätigungseinrichtung (8) oder eine Einrichtung mit elektromagnetischen oder elektropneumatischen Stellgliedern ist und konfiguriert ist, um in besagter zweiten Öffnungsperiode den Kurbelwinkel, bei dem das erste Einlassventil öffnet, und/oder den Kurbelwinkel, bei dem das erste Einlassventil schließt, und/oder den Hub des Einlassventils in Abhängigkeit von der Motorlast und der Motordrehzahl zu ändern.

8. Motor nach Anspruch 1, **dadurch gekennzeichnet, dass** der jedem Zylinder zugeordnete Einspritzer in der Mitte der dem Zylinder zugeordneten Brennkammer angeordnet ist.

9. Motor nach Anspruch 1, **dadurch gekennzeichnet, dass** jedem Zylinder eine Zündkerze zugeordnet ist, die nahe der Mitte der Brennkammer angeordnet ist.

10. Verfahren zur Steuerung eines Verbrennungsmotors mit Fremdzündung, umfassend einen oder mehrere Zylinder (1) und jeweilige Kolben, die sich innerhalb der Zylinder zwischen einem OT und einem UT gleiten und betriebsmäßig mit einer Kurbelwelle verbunden sind, wobei besagter Motor konfiguriert ist, um in jedem Betriebszyklus in jedem Zylinder aufeinanderfolgende Ansaug-, Verdichtungs-, Expansions- und Auslassphasen durchzuführen,
wobei der Motor für jeden Zylinder einschließt:
- einen ersten Ansaugkanal (3A) und einen zweiten Ansaugkanal (3B), die in den Zylinder führen und konfiguriert sind, um Luft mit demselben Druck aufzunehmen,
- ein erstes Einlassventil (VA) und ein zweites Einlassventil (VB), die dem Zylinder (1) zugeordnet sind, um den Eintritt eines Ansaugluftstroms aus dem ersten Ansaugkanal (3A) bzw. aus dem zweiten Ansaugkanal (3B) in den Zylinder während jedes Zylinderbetriebszyklus zu steuern,
- eine Betätigungseinrichtung (6) zum Betätigen besagten ersten Einlassventils (VA) und besagten zweiten Einlassventils (VB),
- ein Kraftstoffversorgungssystem, das mindestens einen Einspritzer umfasst, der jedem Zylinder zugeordnet ist, und konfiguriert und angeordnet ist, um Kraftstoff während jedes Betriebszyklus des Zylinders in eine Brennkammer einzuspeisen, die in dem jeweiligen Zylinder definiert ist, und
- eine Zündkerze, die jedem Zylinder zugeordnet ist,
wobei besagtes Verfahren einschließt:
- Bereitstellen, mittels besagter Betätigungseinrichtung zum Betätigen besagten ersten Einlassventils (VA) und besagten zweiten Einlassventils (VB), in jedem Betriebszyklus des Zylinders, zumindest unter bestimmten Betriebsbedingungen des Motors, einer ersten Öffnungsperiode, in der beide Einlassventile (VA, VB) geöffnet sind, und einer zweiten Öffnungsperiode, in der nur ein erstes Einlassventil (VA) der besagten zwei Einlassventile geöffnet ist, während das zweite Einlassventil (VB) geschlossen bleibt,
- Durchführen einer Kraftstoffeinspritzung in jedem Betriebszyklus jedes Zylinders mittels eines Einspritzers, der im Wesentlichen in der Mitte der jeweiligen Brennkammer angeordnet ist,
wobei besagtes Verfahren **dadurch gekennzeichnet ist, dass**:
- in besagter ersten Öffnungsperiode die beiden Einlassventile (VA, VB) öffnen, wenn der Kolben des jeweiligen Zylinders in der Nähe des OT ist, und schließen, wenn der Kolben sich an einem Zwischenpunkt im Abstieg von OT zu UT befindet,
- in besagter zweiten Öffnungsperiode besagtes erstes Einlassventil (VA) öffnet, wenn der Kolben des jeweiligen Zylinders in der Nähe des UT ist, und schließt, wenn der Kolben von UT zu OT aufsteigt,
- wobei besagter Einspritzer eine Einspritzdüsenadel (109) mit einem kegelförmigen Endkopf (109A) aufweist, der mit einer Düsenaustrittsöffnung (108) des Einspritzers zusammenwirkt, wobei besagte Einspritzdüsenadel (109) eine nach außen öffnende Bewegung aufweist, bei der sich der kegelförmige Kopf (109A) von der Austrittsöffnung (108) der Einspritzdüse (103) wegbewegt, um Kraftstoff in den Zylinder einzuspeisen,
wobei besagtes Verfahren ferner umfasst:
- Durchführen mindestens einer Kraftstoffeinspritzung nach besagter zweiten Öffnungsperiode, wenn der Kolben des jeweiligen Zylinders von UT zu OT aufsteigt,
- auf solche Weise, dass besagte Kraftstoffeinspritzung einen Teil des Luft-Kraftstoff-Gemischs im Zylinder erzeugt, der sich innerhalb der in besagter zweiten Öffnungsperiode erzeugten Drallströmung befindet und durch besagte Drallströmung von der in der ersten Öffnungsperiode eingebrachten Ladung getrennt gehalten wird, wobei diese Ladung näher an den Zylinderwänden liegt.

11. Verfahren nach Anspruch 10, **dadurch gekennzeichnet, dass** es das Durchführen einer weiteren Kraftstoffeinspritzung zwischen der ersten Öffnungsperiode und der zweiten Öffnungsperiode umfasst,
und wobei vorzugsweise mit der zwischen der ersten Öffnungsperiode und der zweiten Öffnungsperiode durchgeführten Einspritzung ein Anteil zwischen 80 % und 90 % der insgesamt in jedem Betriebszyklus des Zylinders eingespritzten Kraftstoffmenge eingebracht wird, während mit der nach besagter zweiten Öffnungsperiode durchgeführten Einspritzung der verbleibende Anteil des Kraftstoffs eingebracht wird.

12. Verfahren nach Anspruch 10, **dadurch gekennzeichnet, dass** besagte weitere Kraftstoffeinspritzung so durchgeführt wird, dass sie ein Gemisch mit einem Luft-Kraftstoff-Verhältnis von mindestens dem 1,5-fachen des stöchiometrischen Verhältnisses ergibt, während die Kraftstoffeinspritzung nach der zweiten Öffnungsperiode so durchgeführt wird, dass der Gemischanteil innerhalb der Drallströmung ein Luft-Kraftstoff-Verhältnis im Wesentlichen gleich dem stöchiometrischen Wert aufweist.

13. Verfahren nach Anspruch 10, **dadurch gekennzeichnet, dass** es das Verdünnen der Ladung im Zylinder durch Zugabe von AGR, vorzugsweise in einem Bereich von 25 % bis 35 % der Ladung, und/oder durch Zugabe von Überschussluft umfasst.

14. Verfahren nach Anspruch 10, **dadurch gekennzeichnet, dass** es das Zuführen eines gasförmigen Kraftstoffs durch mindestens einen in einem der Ansaugkanäle angeordneten Einspritzer und das Zuführen von flüssigem Kraftstoff durch einen Einspritzer, der direkt auf die Brennkammer ausgerichtet ist, umfasst.

## Revendications

1. Moteur à combustion interne à allumage commandé, comprenant un ou plusieurs cylindres (1) et des pistons respectifs coulissant à l'intérieur des cylindres entre un PMH et un PMB et connectés fonctionnellement à un vilebrequin, ledit moteur étant configuré pour effectuer des phases successives d'admission, de compression, de détente et d'échappement pendant chaque cycle de fonctionnement dans chaque cylindre,
dans lequel le moteur inclut, pour chaque cylindre :
- un premier conduit d'admission (3A) et un second conduit d'admission (3B) débouchant dans le cylindre et configurés pour recevoir de l'air à la même pression,
- une première soupape d'admission (VA) et une seconde soupape d'admission (VB) associées au cylindre (1), pour contrôler l'entrée dans le cylindre d'un flux d'air d'admission provenant du premier conduit d'admission (3A) et du second conduit d'admission (3B), respectivement, pendant chaque cycle de fonctionnement du cylindre,
- un dispositif d'actionnement (6) pour actionner ladite première soupape d'admission (VA) et ladite seconde soupape d'admission (VB),
- un système d'alimentation en carburant comprenant au moins un injecteur associé à chaque cylindre, et configuré et agencé pour alimenter en carburant une chambre de combustion définie dans le cylindre respectif, pendant chaque cycle de fonctionnement du cylindre, et
- une bougie d'allumage associée à chaque cylindre,
dans lequel :
- ledit dispositif d'actionnement pour actionner ladite première soupape d'admission (VA) et ladite seconde soupape d'admission (VB) est configuré pour fournir, dans chaque cycle de fonctionnement du cylindre, au moins sous certaines conditions de fonctionnement du moteur:
- une première période d'ouverture, dans laquelle les deux soupapes d'admission (VA, VB) sont ouvertes et une seconde période d'ouverture, dans laquelle seule une première soupape d'admission (VA), desdites deux soupapes d'admission, est ouverte, tandis que la seconde soupape d'admission (VB) reste fermée,
- ledit injecteur est agencé sensiblement au centre de la chambre de combustion respective,
ledit moteur étant **caractérisé en ce que** :
- dans ladite première période d'ouverture les deux soupapes d'admission (VA, VB) s'ouvrent lorsque le piston du cylindre respectif est à proximité du PMH et se ferment lorsque le piston est à un point intermédiaire dans la descente du PMH au PMB,
- dans ladite seconde période d'ouverture ladite première soupape d'admission (VA) s'ouvre lorsque le piston du cylindre respectif est à proximité du PMB, et se ferme lorsque le piston monte du PMB au PMH,
- ledit injecteur a une aiguille d'injecteur (109) ayant une tête terminale conique (109A) coopérant avec un orifice de sortie de buse (108) de l'injecteur et ayant un mouvement d'ouverture vers l'extérieur, dans lequel la tête conique (109A) s'éloigne de l'orifice de sortie (108) de la buse d'injecteur (103) pour alimenter en carburant le cylindre,
- ledit système d'alimentation en carburant est configuré pour effectuer au moins une injection de carburant, via ledit injecteur, dans chaque cycle de fonctionnement de chaque cylindre, après ladite seconde période d'ouverture, lorsque le piston du cylindre respectif monte du PMB au PMH,
- de telle sorte que ladite injection de carburant crée une portion de mélange air-carburant dans le cylindre située à l'intérieur du flux tourbillonnaire créé dans ladite seconde période d'ouverture, et maintenue séparée par ledit flux tourbillonnaire par rapport à la charge introduite dans la première période d'ouverture, laquelle charge est plus adjacente aux parois du cylindre.

2. Moteur selon la revendication 1, **caractérisé en ce qu'**il comprend un servo-distributeur hydraulique (114), à activation électromagnétique, pour actionner le mouvement d'ouverture vers l'extérieur de ladite aiguille d'injecteur.

3. Moteur selon la revendication 1, **caractérisé en ce que** ledit système d'alimentation en carburant est configuré pour effectuer une injection de carburant supplémentaire entre la première période d'ouverture et la seconde période d'ouverture.

4. Moteur selon la revendication 3, **caractérisé en ce que** ladite injection de carburant supplémentaire est effectuée de manière à donner lieu à un mélange avec un rapport air/carburant égal à au moins 1,5 fois le rapport stoechiométrique, tandis que l'injection de carburant après la seconde période d'ouverture est effectuée de manière que la portion de mélange à l'intérieur du flux tourbillonnaire ait un rapport air/carburant sensiblement égal à la valeur stoechiométrique.

5. Moteur selon la revendication 1, **caractérisé en ce que** ladite au moins une injection de carburant est effectuée à un angle de vilebrequin dans une plage comprise entre 660° et 710°, en considérant que le PMH au début de la phase d'admission est égal à 360°.

6. Moteur selon la revendication 1, **caractérisé en ce que** ledit système d'alimentation en carburant est configuré pour effectuer l'injection de carburant supplémentaire entre un angle de vilebrequin de 420° et un angle de vilebrequin de 550°, en considérant que le PMH au début de la phase d'admission est égal à 360°.

7. Moteur selon la revendication 1, dans lequel le dispositif d'actionnement pour actionner les soupapes d'admission est un dispositif d'actionnement hydraulique à commande électronique (8) ou un dispositif avec des actionneurs électromagnétiques ou électropneumatiques et est configuré pour changer, dans ladite seconde période d'ouverture, l'angle de vilebrequin auquel la première soupape d'admission s'ouvre et/ou l'angle de vilebrequin auquel la première soupape d'admission se ferme et/ou la levée de la soupape d'admission, en fonction de la charge du moteur et de la vitesse du moteur.

8. Moteur selon la revendication 1, **caractérisé en ce que** l'injecteur associé à chaque cylindre est agencé au centre de la chambre de combustion associée au cylindre.

9. Moteur selon la revendication 1, **caractérisé en ce qu'**avec chaque cylindre est associée une bougie d'allumage agencée près du centre de la chambre de combustion.

10. Procédé de commande d'un moteur à combustion interne à allumage commandé, comprenant un ou plusieurs cylindres (1) et des pistons respectifs coulissant à l'intérieur des cylindres entre un PMH et un PMB et connectés fonctionnellement à un vilebrequin, ledit moteur étant configuré pour actionner des phases successives d'admission, de compression, de détente et d'échappement pendant chaque cycle de fonctionnement dans chaque cylindre,
dans lequel le moteur inclut, pour chaque cylindre :
- un premier conduit d'admission (3A) et un second conduit d'admission (3B) débouchant dans le cylindre et configurés pour recevoir de l'air à la même pression,
- une première soupape d'admission (VA) et une seconde soupape d'admission (VB) associées au cylindre (1), pour contrôler l'entrée dans le cylindre d'un flux d'air d'admission provenant du premier conduit d'admission (3A) et du second conduit d'admission (3B), respectivement, pendant chaque cycle de fonctionnement du cylindre,
- un dispositif d'actionnement (6) pour actionner ladite première soupape d'admission (VA) et ladite seconde soupape d'admission (VB),
- un système d'alimentation en carburant comprenant au moins un injecteur associé à chaque cylindre, et configuré et agencé pour alimenter en carburant une chambre de combustion définie dans le cylindre respectif, pendant chaque cycle de fonctionnement du cylindre, et
- une bougie d'allumage associée à chaque cylindre,
ledit procédé incluant :
- fournir, au moyen dudit dispositif d'actionnement pour actionner ladite première soupape d'admission (VA) et ladite seconde soupape d'admission (VB), dans chaque cycle de fonctionnement du cylindre, au moins sous certaines conditions de fonctionnement du moteur, une première période d'ouverture, dans laquelle les deux soupapes d'admission (VA, VB) sont ouvertes et une seconde période d'ouverture, dans laquelle seule une première soupape d'admission (VA), desdites deux soupapes d'admission, est ouverte, tandis que la seconde soupape d'admission (VB) reste fermée,
- effectuer une injection de carburant dans chaque cycle de fonctionnement de chaque cylindre, au moyen d'un injecteur agencé sensiblement au centre de la chambre de combustion respective,
ledit procédé étant **caractérisé en ce que** :
- dans ladite première période d'ouverture les deux soupapes d'admission (VA, VB) s'ouvrent lorsque le piston du cylindre respectif est à proximité du PMH et se ferment lorsque le piston est à un point intermédiaire dans la descente du PMH au PMB,
- dans ladite seconde période d'ouverture ladite première soupape d'admission (VA) s'ouvre lorsque le piston du cylindre respectif est à proximité du PMB, et se ferme lorsque le piston monte du PMB au PMH,
- dans lequel ledit injecteur a une aiguille d'injecteur (109) ayant une tête terminale conique (109A) coopérant avec un orifice de sortie de buse (108) de l'injecteur, ladite aiguille d'injecteur (109) ayant un mouvement d'ouverture vers l'extérieur, dans lequel la tête conique (109A) s'éloigne de l'orifice de sortie (108) de la buse d'injecteur (103) pour alimenter en carburant le cylindre,
ledit procédé comprenant en outre :
- effectuer au moins une injection de carburant après ladite seconde période d'ouverture, lorsque le piston du cylindre respectif monte du PMB au PMH
- de telle sorte que ladite injection de carburant crée une portion de mélange air-carburant dans le cylindre située à l'intérieur du flux tourbillonnaire créé dans ladite seconde période d'ouverture, et maintenue séparée par ledit flux tourbillonnaire par rapport à la charge introduite dans la première période d'ouverture, laquelle charge est plus adjacente aux parois du cylindre.

11. Procédé selon la revendication 10, **caractérisé en ce qu'**il comprend l'exécution d'une injection de carburant supplémentaire entre la première période d'ouverture et la seconde période d'ouverture,
et dans lequel de préférence avec l'injection effectuée entre la première période d'ouverture et la seconde période d'ouverture, une portion est introduite entre 80% et 90% de la quantité totale de carburant injectée dans chaque cycle de fonctionnement du cylindre, tandis qu'avec l'injection effectuée après ladite seconde période d'ouverture, la portion restante de carburant est introduite.

12. Procédé selon la revendication 10, **caractérisé en ce que** ladite injection de carburant supplémentaire est effectuée de manière à donner lieu à un mélange avec un rapport air/carburant égal à au moins 1,5 fois le rapport stoechiométrique, tandis que l'injection de carburant après la seconde période d'ouverture est effectuée de manière que la portion de mélange à l'intérieur du flux tourbillonnaire ait un rapport air/carburant sensiblement égal à la valeur stoechiométrique.

13. Procédé selon la revendication 10, **caractérisé en ce qu'**il comprend la dilution de la charge dans le cylindre par l'ajout d'EGR, de préférence dans une plage de 25% à 35% de la charge, et/ou par l'ajout d'air en excès.

14. Procédé selon la revendication 10, **caractérisé en ce qu'**il comprend l'alimentation en carburant gazeux par au moins un injecteur agencé dans l'un des conduits d'admission et l'alimentation en carburant liquide par un injecteur faisant directement face à la chambre de combustion.
